# EUROPEAN PATENT APPLICATION

(11) **EP 4 574 785 A1**
(43) Date of publication of application: **25.06.2025**
(21) Application number: 24222306.3
(22) Date of filing: 20.12.2024
(51) Int. Cl.: C03C 3/068

(54) **LUMINESCENT ANTIBACTERIAL GLASS COMPOSITION AND METHOD FOR PREPARING LUMINESCENT ANTIBACTERIAL GLASS POWDERS INCLUDING THE SAME**

(30) Priority: 22.12.2023 KR 20230189729
(71) Applicant: LG Electronics Inc., Yeongdeungpo-gu Seoul 07336 (KR)
(72) Inventor: KANG, Dongwon, Seoul 08592 (KR); KIM, Young Seok, Seoul 08592 (KR); CHOI, Wongyu, Seoul 08592 (KR); KIM, Daesung, Seoul 08592 (KR); PARK, Jeong Yong, Seoul 08592 (KR)
(74) Representative: Ter Meer Steinmeister & Partner

(57) **Abstract**

Disclosed are a luminescent antibacterial glass composition and a method for preparing luminescent antibacterial glass powders including the same, in which a luminescent function is imparted to the antibacterial glass composition, such that whether an antibacterial agent is properly contained in a home appliance component is directly identified using an external light source. As a result, a luminescent oxide as an active agent having a luminescent function is added to a glass structure having the antibacterial function, thereby exhibiting the luminescent function, so that when the antibacterial glass powders are applied to the parts of the home appliance, a consumer and a product manufacturer may easily identify whether the antibacterial agent is contained in the parts.

## Description

### BACKGROUND

### Field

The present disclosure relates to a luminescent antibacterial glass composition and a method for preparing luminescent antibacterial glass powders including the same.

### Description of Related Art

Microorganisms such as germs, fungi, and bacteria are ubiquitous in our living spaces such as water purifiers, refrigerators, ovens, and washing machines. When microorganisms enter the human body, they may cause life-threatening infections. Therefore, an antibacterial glass composition capable of controlling spread of the microorganisms in the home appliances such as water purifiers, refrigerators, ovens, and washing machines is required.

In these home appliances, bacteria and molds may grow in a part that may be exposed to moisture among parts including plastic injection molded products, thereby causing problems in appearance or the environment.

The bacteria that live in home appliances are very diverse, and the main strains may vary depending on types of the parts. However, Pseudomonas aeruginosa is generally more likely to live in the parts that are exposed to moisture.

Therefore, an antibacterial agent should have antibacterial performance against these strains. Furthermore, the antibacterial agent should be strictly selected from materials that have low toxicity to the human body and the environment and have high temperature durability.

The antibacterial agent is used as an additive into parts of home appliances that require hygiene. In general, the antibacterial agent is added to a base material of home appliance parts, such as plastic at about 1 wt%. Thus, although the antibacterial agent is contained in the parts of home appliances, it is difficult to visually identify whether the antibacterial agent is contained in the parts of home appliances. It takes a considerable amount of time to identify the effectiveness thereof while being exposed to contaminants.

In addition, there are limited methods for the product production companies to identify whether the antibacterial agent supplied through partners are contained in parts of home appliances in a designed manner.

Prior art literature: (Patent literature 1) Korean Patent Application Publication No. 10-2021-0128032 (Published on October 25, 2021)

### SUMMARY

A purpose of the present disclosure is to provide a luminescent antibacterial glass composition having both an antibacterial function and a luminescent function and a method for preparing luminescent antibacterial glass powders including the same, in which in order to impart a luminescent function to an antibacterial agent prepared as an antibacterial glass composition, a glass composition including Al₂O₃, MgO, etc., which serve as a host structure is provided as the antibacterial glass composition, and Eu₂O₃, Tb₄O₇, etc. as luminescence activator materials is further added thereto.

In addition, a purpose of the present disclosure is to provide a luminescent antibacterial glass composition and a method for preparing luminescent antibacterial glass powders including the same, in which antibacterial glass powders are applied to home appliances to impart an antibacterial function thereto, and a luminescent function is imparted thereto to allow whether an antibacterial agent is contained in a part of the home appliance to be visually identified, and furthermore, and to achieve convenience of quality inspection.

Furthermore, a purpose of the present disclosure is to provide a luminescent antibacterial glass composition and a method for preparing luminescent antibacterial glass powders including the same, in which the luminescent antibacterial glass composition to which a luminescent function is imparted may be used to allow whether an antibacterial agent is properly contained in a component of a home appliance to be directly identified using an external light source.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

The present disclosure provides a luminescent antibacterial glass composition having both an antibacterial function and a luminescent function and a method for preparing luminescent antibacterial glass powders including the same, in which in order to impart a luminescent function to an antibacterial agent prepared as an antibacterial glass composition, a glass composition including Al₂O₃, MgO, etc., which serve as a host structure is provided as the antibacterial glass composition, and Eu₂O₃, Tb₄O₇, etc. as luminescence activator materials is further added thereto.

In addition, the present disclosure provides a luminescent antibacterial glass composition having both an antibacterial function and a luminescent function and a method for preparing luminescent antibacterial glass powders including the same, in which antibacterial glass powders are applied to home appliances to impart an antibacterial function thereto, and a luminescent function is imparted thereto to allow whether an antibacterial agent is contained in a part of the home appliance to be visually identified, and furthermore, and to achieve convenience of quality inspection.

Furthermore, the present disclosure provides a luminescent antibacterial glass composition having both an antibacterial function and a luminescent function and a method for preparing luminescent antibacterial glass powders including the same, in which the luminescent antibacterial glass composition to which a luminescent function is imparted may be used to allow whether an antibacterial agent is properly contained in a component of a home appliance to be directly identified using an external light source.

Furthermore, the present disclosure provides a luminescent antibacterial glass composition having both an antibacterial function and a luminescent function and a method for preparing luminescent antibacterial glass powders including the same, in which a luminescent oxide as an active agent having a luminescent function is added to the glass structure having the antibacterial function, thereby exhibiting the luminescent function, so that when the antibacterial glass powders are applied to the parts of the home appliance, a consumer and a product manufacturer may easily identify whether the antibacterial agent is contained in the parts.

For this purpose, the luminescent antibacterial glass composition according to one aspect of the present disclosure includes 20 to 40 wt% of SiO₂; 1.5 to 10 wt% of B₂O₃; 20 to 40 wt% of ZnO; 5 to 10 wt% of Al₂O₃; 5 to 10 wt% of MgO; a total of 5 to 30 wt% of at least one of Na₂O, K₂O, or CaO; a total of 0.1 to 5 wt% of at least one of CuO or Ag₂O; and 0.1 to 2 wt% of a luminescent oxide.

In accordance with some embodiments of the luminescent antibacterial glass composition, Na₂O is added in a content of 2 to 10 wt%, wherein K₂O is added in a content of 2 to 15 wt%, wherein CaO is added in a content of 1 to 5 wt%.

In accordance with some embodiments of the luminescent antibacterial glass composition, CuO is added in a content of 0.1 to 5 wt%, wherein Ag₂O is added in a content of 0.1 to 2 wt%.

In accordance with some embodiments of the luminescent antibacterial glass composition, the luminescent oxide includes at least one of Eu₂O₃ or Tb₄O₇.

In accordance with some embodiments of the luminescent antibacterial glass composition, the luminescent oxide is Eu₂O₃, wherein Eu₂O₃ is added in a content of 0.5 to 1.0 wt%.

In the luminescent antibacterial glass composition having both an antibacterial function and a luminescent function and the method for preparing luminescent antibacterial glass powders including the same according to the present disclosure, in order to impart a luminescent function to an antibacterial agent prepared as an antibacterial glass composition, a glass composition including Al₂O₃, MgO, etc., which serve as a host structure is provided as the antibacterial glass composition, and Eu₂O₃, Tb₄O₇, etc. as luminescence activator materials is further added thereto.

Further, in the luminescent antibacterial glass composition having both an antibacterial function and a luminescent function and the method for preparing luminescent antibacterial glass powders including the same according to the present disclosure, the antibacterial glass powders are applied to home appliances to impart an antibacterial function thereto, and a luminescent function is imparted thereto to allow whether an antibacterial agent is contained in a part of the home appliance to be visually identified, and furthermore, and to achieve convenience of quality inspection.

Furthermore, in the luminescent antibacterial glass composition having both an antibacterial function and a luminescent function and the method for preparing luminescent antibacterial glass powders including the same according to the present disclosure, the luminescent antibacterial glass composition to which a luminescent function is imparted may be used to allow whether an antibacterial agent is properly contained in a component of a home appliance to be directly identified using an external light source.

Furthermore, in the luminescent antibacterial glass composition having both an antibacterial function and a luminescent function and the method for preparing luminescent antibacterial glass powders including the same according to the present disclosure, the luminescent oxide as an active agent having a luminescent function is added to the glass structure having the antibacterial function, thereby exhibiting the luminescent function, so that when the antibacterial glass powders are applied to the parts of the home appliance, a consumer and a product manufacturer may easily identify whether the antibacterial agent is contained in the parts.

Furthermore, in the luminescent antibacterial glass composition having both an antibacterial function and a luminescent function and the method for preparing luminescent antibacterial glass powders including the same according to the present disclosure, the novel composition including a luminescent factor may be designed and added to the antibacterial glass powders as the antibacterial agent, which in turn may be added to the parts of the home appliance, thereby allowing whether the antibacterial agent is properly contained in the parts of the home appliance to be easily identified.

As a result, the product manufacturer may visually identify whether the antibacterial agent is contained in the product in the antibacterial part import inspection or the consumer may visually identify whether the antibacterial agent is contained in the product having a hygiene function, thereby increasing the reliability of the product.

Furthermore, the hygiene of the product may be improved with the antibacterial agent and at the same time, the consumer or the product manufacturer may immediately detect the factor of the hygiene function, thereby upgrading the function of the antibacterial agent.

In addition to the effects as described above, specific effects of the present disclosure are described together with the specific details for carrying out the disclosure below.

### BRIEF DESCRIPTION OF DRAWINGS

FIG. 1 is a process flow chart showing a method for preparing luminescent antibacterial glass powders according to an embodiment of the present disclosure.
FIG. 2 is an actual photograph showing a state before UV lamp light irradiation to antibacterial glass powders as prepared according to each of Present Example 1 and Comparative Example 1.
FIG. 3 is an actual photograph showing a state after UV lamp light irradiation to antibacterial glass powders as prepared according to each of Present Example 1 and Comparative Example 1.
FIG. 4 and FIG. 5 are photographs showing a result of an antibacterial test on antibacterial glass powders as prepared according to each of Present Examples 1 and 2.

### DETAILED DESCRIPTIONS

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to the present disclosure will be described in detail with reference to the attached drawings. In the drawings, identical reference numerals are used to indicate identical or similar components.

As used herein, singular expressions include plural expressions, unless the context clearly dictates otherwise. In the present application, terms such as "composed of" or "include" should not be construed as necessarily including all of various components or steps described herein, and should be interpreted as being able to not including some of the components or the steps and further including additional components or steps.

Hereinafter, a luminescent antibacterial glass composition and a method for preparing luminescent antibacterial glass powders including the same according to some embodiments of the present disclosure will be described.

Recently, bacteria and molds are generated and propagated via contact with moisture and food, thereby causing hygiene problems. Since COVID 19, consumers' demands for hygiene are increasing and its importance is increasing day by day.

In order to impart an antibacterial ability to the home appliances, a small amount of antibacterial glass powders as an antibacterial agent is introduced into a plastic part to impart the antibacterial functions thereto. However, it is difficult to visually identify whether the actual antibacterial agent has been properly added to the plastic part. It is difficult for the product manufacturer to determine whether the antibacterial agent has been properly added to the parts in quality inspection.

Therefore, in the luminescent antibacterial glass composition according to an embodiment of the present disclosure, in order to impart a luminescent function to an antibacterial agent prepared as an antibacterial glass composition, a glass composition including Al₂O₃, MgO, etc., which serve as a host structure is provided as the antibacterial glass composition, and Eu₂O₃, Tb₄O₇, etc. as luminescence activator materials is further added thereto, such that the luminescent antibacterial glass composition has both the antibacterial function and the luminescent function.

Thus, the antibacterial glass powders are applied to home appliances to impart an antibacterial function thereto, and the luminescent function is imparted thereto to allow whether the antibacterial agent is contained in a part of the home appliance to be visually identified, and furthermore, and to achieve convenience of quality inspection.

Furthermore, the luminescent antibacterial glass composition to which the luminescent function is imparted may be used to allow whether an antibacterial agent is properly contained in a component of a home appliance to be directly identified using an external light source.

In the luminescent antibacterial glass composition having both an antibacterial function and a luminescent function according to the present disclosure, the luminescent oxide as an active agent having a luminescent function is added to the glass structure having the antibacterial function, thereby exhibiting the luminescent function, so that when the antibacterial glass powders are applied to the parts of the home appliance, a consumer and a product manufacturer may easily identify whether the antibacterial agent is contained in the parts.

In general, a scheme of identifying whether the actual antibacterial agent is contained in products and parts to which the antibacterial agent is prescribed to be added is limited, and is relatively expensive and time-consuming. For example, the plastic is burned to leave only the antibacterial agent, which in turn is identified using weight measurement, X-ray CT, etc.

However, in the luminescent antibacterial glass composition having both an antibacterial function and a luminescent function according to the present disclosure, the novel composition including a luminescent factor may be designed and added to the antibacterial glass powders as the antibacterial agent, which in turn may be added to the parts of the home appliance, thereby allowing whether the antibacterial agent is properly contained in the parts of the home appliance to be easily identified.

As a result, the product manufacturer may visually identify whether the antibacterial agent is contained in the product in the antibacterial part import inspection or the consumer may visually identify whether the antibacterial agent is contained in the product having a hygiene function, thereby increasing the reliability of the product.

Furthermore, the hygiene of the product may be improved with the antibacterial agent and at the same time, the consumer or the product manufacturer may immediately detect the factor of the hygiene function, thereby upgrading the function of the antibacterial agent.

For this purpose, the luminescent antibacterial glass composition according to one aspect of the present disclosure includes 20 to 40 wt% of SiO₂; 1.5 to 10 wt% of B₂O₃; 20 to 40 wt% of ZnO; 5 to 10 wt% of Al₂O₃; 5 to 10 wt% of MgO; a total of 5 to 30 wt% of at least one of Na₂O, K₂O, or CaO; a total of 0.1 to 5 wt% of at least one of CuO or Ag₂O; and 0.1 to 2 wt% of a luminescent oxide.

In accordance with some embodiments of the luminescent antibacterial glass composition, Na₂O is added in a content of 2 to 10 wt%, wherein K₂O is added in a content of 2 to 15 wt%, wherein CaO is added in a content of 1 to 5 wt%.

In accordance with some embodiments of the luminescent antibacterial glass composition, CuO is added in a content of 0.1 to 5 wt%, wherein Ag₂O is added in a content of 0.1 to 2 wt%.

In accordance with some embodiments of the luminescent antibacterial glass composition, the luminescent oxide includes at least one of Eu₂O₃ or Tb₄O₇.

In accordance with some embodiments of the luminescent antibacterial glass composition, the luminescent oxide is Eu₂O₃, wherein Eu₂O₃ is added in a content of 0.5 to 1.0 wt%.

Hereinafter, a role and a content of each of components of the luminescent antibacterial glass composition according to an embodiment of the present disclosure will be described in detail.

SiO₂ is a glass forming agent that enables vitrification, and is a key component that plays the role of a framework in terms of the structure of the glass. When SiO₂ is contained in an amount exceeding the appropriate amount, the viscosity increases when the glass is melted, thereby reducing the workability and yield during the cooling process.

Therefore, it is preferable that SiO₂ be added in a content of 20 to 40 wt%, more preferably, 28 to 34 wt% based on a total weight of the luminescent antibacterial glass composition according to the present disclosure. When the amount of SiO₂ as added is smaller than 20 wt%, crystallization may occur when the glass is melted, such that stable glass may not be formed. On the other hand, when the amount of SiO₂ as added exceeds 40 wt%, this is advantageous for vitrification, while the melting temperature increases, such that the vitrification temperature (Tg) increases, so that the firing temperature increases to secure a transparent glass film during the coating film formation process using glass powders, thereby causing the composition not to be suitable for the heat-strengthening process temperature.

B₂O₃ is a representative network-forming oxide and is a key component that enables sufficient vitrification together with SiO₂. B₂O₃ has a low melting point, and thus is used to lower the eutectic point of the melt. Furthermore, B₂O₃ helps to make a homogeneous glass by increasing the solubility of rigid components (Al₂O₃, CuO, etc.) during melting for vitrification. However, when B₂O₃ is added in excess of a predetermined amount, this may weaken the bonding structure of the glass, thereby causing problems such as lowering water resistance.

Therefore, it is desirable to use B₂O₃ in a small amount only to lower the melting point in order to implement water-insoluble antibacterial glass.

For this purpose, it is desirable to add B₂O₃ in a content of 1.5 to 10 wt% based on a total weight of the luminescent antibacterial glass composition according to the present disclosure. When the amount of B₂O₃ added is smaller than 1.5 wt%, this may result in being out of a vitrification region due to insufficient flux, resulting in unmelted glass. On the other hand, when the amount of B₂O₃ added exceeds 10 wt%, a structural problem of B in the network-forming structure may occur, resulting in a decrease in water resistance due to the inherent properties of the element.

ZnO is a component that acts as an antibacterial agent and lowers the vitrification temperature in glass formation.

This ZnO is an intermediate oxide. In order that the ZnO participates in the network-forming structure in glass, ZnO should have a small atomic radius and has a high electronegativity, so that a difference thereof from electronegativity of oxygen is small. This intermediate oxide is a component that has a larger atomic radius than that of the typical network-forming oxide, that is, Si, P, and B, and has a lower electronegativity than that of the typical network-forming oxide, such that it is difficult for the component to form glass alone, but the component replaces the network-forming oxide in a situation where the network-forming oxide exists and thus plays the role thereof. This ZnO acts only as a modifier oxide when the content thereof is below a predetermined content level. However, when the content thereof exceeds the predetermined content level, ZnO forms a covalent bond, thereby dramatically improving durability. In this regard, the predetermined content level is determined based on the content of each of the network-forming oxide and the modifier oxide.

Therefore, it is preferable that ZnO is added in a content of 20 to 40 wt% based on a total weight of the luminescent antibacterial glass composition according to the present disclosure. It is more preferable that ZnO is added in a content of 30 to 35 wt% based on a total weight of the luminescent antibacterial glass composition according to the present disclosure. When the amount of ZnO as added is smaller than 20 wt%, there is a problem that sufficient antibacterial power is not exhibited because an absolute amount of the material that exhibits the antibacterial performance is insufficient. On the other hand, when the amount of ZnO as added exceeds 40 wt%, the ZnO content is too high, thereby making it difficult to prepare a stable glass because the vitrification formation region is narrow.

Al₂O₃ plays a role as a host structure to obtain the luminescent effect of the activator in addition to the formation of the vitrification structure. That is, Al₂O₃ is a material that acts as a host for the fluorescent substance and also helps in the formation of the vitrification. In this way, Al₂O₃ plays a major role such that the transparent glass composition performs the luminescent function.

Therefore, Al₂O₃ is preferably added in a content of 5 to 10 wt%, more preferably, 6 to 8 wt% based on a total weight of the luminescent antibacterial glass composition according to the present disclosure. When the amount of Al₂O₃ as added is smaller than 5 wt%, there is a concern that it may not properly perform its role as a host structure. On the other hand, when the amount of Al₂O₃ as added exceeds 10 wt%, this may result in being out of the vitrification region, such that during the cooling process, the composition may become devitrified or become immiscible.

MgO acts as a host for the fluorescent function to obtain the luminescent effect of the activator together with Al₂O₃.

It is preferable that MgO be added in a content of 5 to 10 wt%, more preferably, 5 to 6 wt%, based on a total weight of the luminescent antibacterial glass composition according to the present disclosure. When the amount of MgO as added is smaller than 5 wt%, there is a concern that it may not properly perform its role as a host structure. On the other hand, when the amount of MgO as added exceeds 10 wt%, it is difficult to achieve vitrification of the composition, and a high melting temperature is required.

Each of alkali oxides such as Na₂O, K₂O, and CaO acts as a network modifier that forms non-crosslinking bonds in the glass composition to lower the vitrification temperature. Each of these components alone cannot be vitrified. However, when each of these components is mixed with a network forming agent such as SiO₂ and B₂O₃ at a predetermined content, the vitrification thereof becomes possible. When only one of Na₂O, K₂O, and CaO components is contained in the glass composition, the durability of the glass may be weakened within the vitrification region. However, when at least two of Na₂O, K₂O, and CaO components are contained in the glass composition, the durability of the glass is improved depending on the content ratio thereof. This is called a mixed alkali effect.

Therefore, the alkali oxides such as Na₂O, K₂O, and CaO enhance antibacterial properties under the fact that they first occupy the modifier oxide site in the glass. In addition, alkali oxides such as Na₂O, K₂O, and CaO allow the intermediate oxide ZnO to contribute to the network formation, thereby enhancing durability and contributing to the expression of antibacterial properties due to the water-insoluble characteristic and surface charges.

It is preferable that a total content of at least one of Na₂O, K₂O, and CaO is in a range of 5 to 30 wt% based on a total weight of the luminescent antibacterial glass composition according to the present disclosure. When the total content of at least one of Na₂O, K₂O, and CaO is smaller than 5 wt%, this may result in being out of the vitrification region due to insufficient flux such that the phenomenon of forming an unmelted product may occur. On the other hand, when the total content of at least one of Na₂O, K₂O, and CaO exceeds 30 wt%, crystallization may occur.

In this regard, it is more preferable that Na₂O₃ is added in a content of 2 to 10 wt%, K₂O is added in a content of 2 to 15 wt%, and CaO is added in a content of 1 to 5 wt%.

CuO and Ag₂O are antibacterial active factors that may maximize antibacterial activity.

It is preferable that a total content of at least one of CuO and Ag₂O is in a range of 0.1 to 5 wt% based on a total weight of the luminescent antibacterial glass composition according to the present disclosure. When the total content of at least one of CuO and Ag₂O is smaller than 0.1 wt%, there is a concern that the antibacterial activity may not be properly expressed. On the other hand, when the total content of at least one of CuO and Ag₂O exceeds 5 wt%, there is a concern that crystallization may occur and the color of the glass may become blackened.

In this regard, it is more preferable that CuO is added in a content of 0.1 to 5 wt% and Ag₂O is added in a content of 0.1 to 2 wt%.

The luminescent oxide acts as a luminescence activator and is doped into the vitrified host composition and thus plays a main role in releasing energy to emit light. Therefore, in accordance with the present disclosure, the luminescent oxide may be an essential component added to achieve the luminescent function.

The luminescent oxide includes at least one of Eu₂O₃ and Tb₄O₇. It this regard, it is more preferable to use Eu₂O₃ as the luminescent oxide.

The luminescent oxide is preferably added in a content of 0.1 to 2 wt%, more preferably, 0.5 to 1.0 wt%, based on a total weight of the luminescent antibacterial glass composition according to the present disclosure. When the amount of the luminescent oxide as added is smaller than 0.1 wt%, there is a concern that the luminescent function may not be properly implemented. On the other hand, when the amount of the luminescent oxide as added exceeds 2 wt% and thus is added in a large quantity, crystallization may occur.

Hereinafter, a method for preparing luminescent antibacterial glass powders according to an embodiment of the present disclosure will be described with reference to the attached drawings.

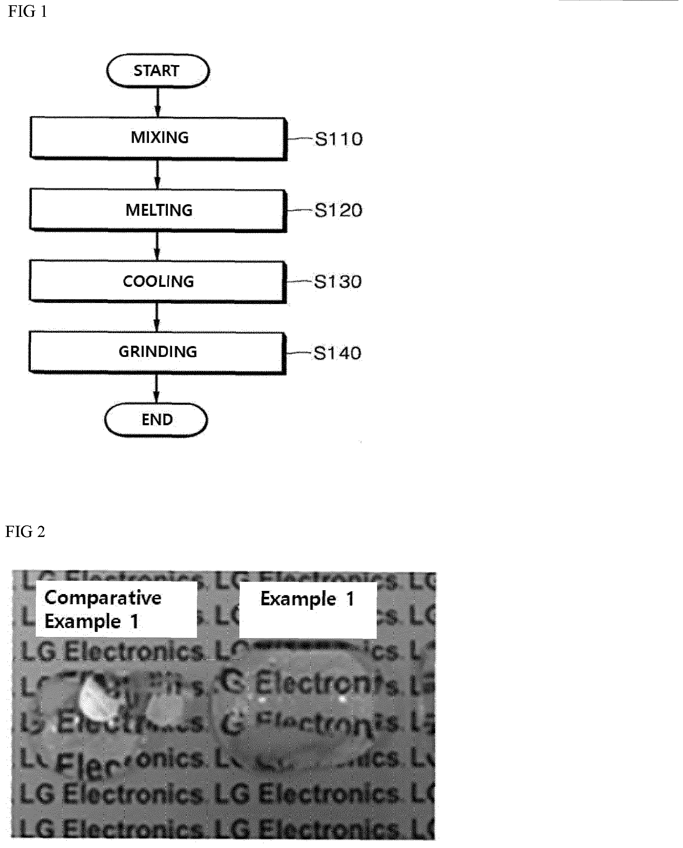

FIG. 1 is a process flow chart showing a method for preparing luminescent antibacterial glass powders according to an embodiment of the present disclosure.

As shown in FIG. 1, the method for preparing luminescent antibacterial glass powders according to an embodiment of the present disclosure includes a mixing step in S110, a melting step in S120, a cooling step in S130, and a pulverizing step in S140.

### Mixing

The mixing step in S110 includes mixing and stirring 20 to 40 wt% of SiO₂, 1.5 to 10 wt% of B₂O₃, 20 to 40 wt% of ZnO, 5 to 10 wt% of Al₂O₃, 5 to 10 wt% of MgO, a total of 5 to 30 wt% of at least one of Na₂O, K₂O, or CaO, a total of 0.1 to 5 wt% of at least one of CuO or Ag₂O, and 0.1 to 2 wt% of a luminescent oxide with each other to prepare a luminescent antibacterial glass composition.

In accordance with some embodiments of the method for preparing luminescent antibacterial glass powders, in the mixing step, Na₂O is added in a content of 2 to 10 wt%, K₂O is added in a content of 2 to 15 wt%, and CaO is added in a content of 1 to 5 wt%.

In accordance with some embodiments of the method for preparing luminescent antibacterial glass powders, in the mixing step, CuO is added in a content of 0.1 to 5 wt%, and Ag₂O is added in a content of 0.1 to 2 wt%.

In accordance with some embodiments of the method for preparing luminescent antibacterial glass powders, in the mixing step, the luminescent oxide includes at least one of Eu₂O₃ or Tb₄O₇.

In accordance with some embodiments of the method for preparing luminescent antibacterial glass powders, in the mixing step, the luminescent oxide is Eu₂O₃, wherein Eu₂O₃ is added in a content of 0.5 to 1.0 wt%.

### Melting

In the melting step in S120, the luminescent antibacterial glass composition is melted.

In accordance with some embodiments of the method for preparing luminescent antibacterial glass powders, in the melting step, the melting is performed at a temperature of 1,000 to 1,300°C and for 30 to 90 minutes. When the melting temperature is lower than 1,000°C or the melting time is smaller than 30 minutes, there is a problem that the antibacterial glass composition is not completely melted, thereby causing immiscibility of the glass melt. On the other hand, when the melting temperature exceeds 1,300°C or the melting time exceeds 90 minutes, it is not economical because excessive energy and time are required.

### Cooling

In the cooling step in S130, the molten luminescent antibacterial glass composition is cooled to room temperature.

In this step, it is preferable that the cooling is performed using a cooling in furnace scheme. When air cooling or water cooling is applied, the internal stress of the antibacterial glass is increased, thereby causing cracks in some cases. Thus, it is preferable that the cooling is performed in the furnace.

### Pulverizing

In the pulverizing step in S140, the cooled luminescent antibacterial glass composition is pulverized to obtain luminescent antibacterial glass powders. In this regard, any of the commonly known ball mills, jet mills, and planetary mills may be applied to the pulverizing step.

Thus, the glass is finely pulverized, such that the luminescent antibacterial glass powders are prepared. It is preferable that each of the luminescent antibacterial glass powders has an average diameter of 5 to 15 *µ*m based on D₅₀.

In the above-mentioned process S110 to S140, the luminescent antibacterial glass powders including the luminescent antibacterial glass composition according to an embodiment of the present disclosure may be prepared.

In the luminescent antibacterial glass composition having both an antibacterial function and a luminescent function and the method for preparing luminescent antibacterial glass powders including the same according to the present disclosure, in order to impart a luminescent function to an antibacterial agent prepared as an antibacterial glass composition, a glass composition including Al₂O₃, MgO, etc., which serve as a host structure is provided as the antibacterial glass composition, and Eu₂O₃, Tb₄O₇, etc. as luminescence activator materials is further added thereto.

Further, in the luminescent antibacterial glass composition having both an antibacterial function and a luminescent function and the method for preparing luminescent antibacterial glass powders including the same according to the present disclosure, the antibacterial glass powders are applied to home appliances to impart an antibacterial function thereto, and a luminescent function is imparted thereto to allow whether an antibacterial agent is contained in a part of the home appliance to be visually identified, and furthermore, and to achieve convenience of quality inspection.

Furthermore, in the luminescent antibacterial glass composition having both an antibacterial function and a luminescent function and the method for preparing luminescent antibacterial glass powders including the same according to the present disclosure, the luminescent antibacterial glass composition to which a luminescent function is imparted may be used to allow whether an antibacterial agent is properly contained in a component of a home appliance to be directly identified using an external light source.

Furthermore, in the luminescent antibacterial glass composition having both an antibacterial function and a luminescent function and the method for preparing luminescent antibacterial glass powders including the same according to the present disclosure, the luminescent oxide as an active agent having a luminescent function is added to the glass structure having the antibacterial function, thereby exhibiting the luminescent function, so that when the antibacterial glass powders are applied to the parts of the home appliance, a consumer and a product manufacturer may easily identify whether the antibacterial agent is contained in the parts.

### Examples

Hereinafter, the configuration and the effect of the present disclosure will be described in more detail based on a preferred example of the present disclosure. However, this is presented as a preferred implementation of the present disclosure and cannot be interpreted as limiting the present disclosure in any way.

Since the contents not described here may be sufficiently technically inferred by a person skilled in the art, the description thereof will be omitted.

### 1. Preparation of antibacterial glass powders sample

Table 1 shows the components and the composition ratio thereof of the antibacterial glass composition according to each of Present Examples 1 to 2 and Comparative Example 1. In this regard, the antibacterial glass composition having the composition as described in each of Present Examples 1 to 2 and Comparative Example 1 was melted in an electric furnace at a temperature of 1,200°C, and then cooled into a form of a glass bulk on a stainless steel plate using an air cooling scheme. Thereafter, the antibacterial glass as prepared according to each of Present Examples 1 to 2 and Comparative Example 1 was pulverized using a dry grinder (ball mill), and then passed through a 400 mesh sieve to prepare the antibacterial glass powders sample.

In this regard, the raw materials of the components Na₂O, K₂O, and CaO were Na₂CO₃, K₂CO₃, and CaCO₃, respectively, and the remaining components were the same as those described in Table 1.

**Table 1] Unit: weight%)**

| Examples | Present Example 1 | Present Example 2 | Comparative Example 1 |
|---|---|---|---|
| SiO₂ | 30 | 30 | 30 |
| B₂O₃ | 3 | 3 | 3 |
| Na₂O | 9.2 | 9.2 | 9.2 |
| K₂O | 9.6 | 9.6 | 9.6 |
| ZnO | 32 | 32 | 32 |
| Al₂O₃ | 6.0 | 6.0 | 6.5 |
| MgO | 5.5 | 5.0 | 5.5 |
| CaO | 3.5 | 3.5 | 3.5 |
| CuO | 0.2 | 0.2 | 0.2 |
| Ag₂O | 0.5 | 0.5 | 0.5 |
| EU₂O₃ | 0.5 | 1 | |
| Total | 100 | 100 | 100 |

### 2. Property Evaluation

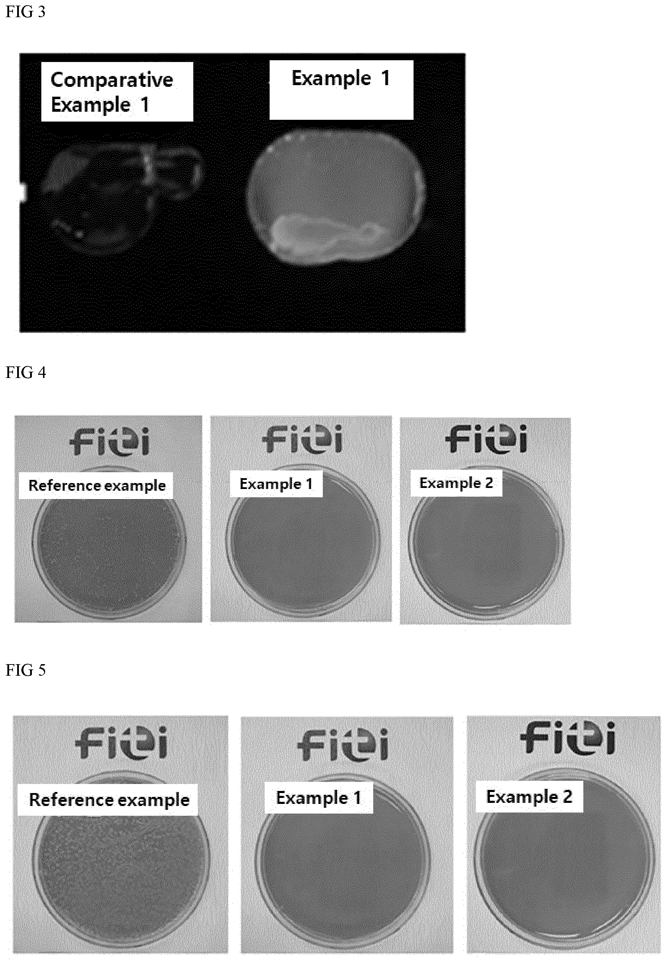

Table 2 shows the results of the property evaluation on the antibacterial glass powders as prepared according to each of Present Examples 1 to 2 and Comparative Example 1. Furthermore, FIG. 2 is an actual photograph showing a state before UV lamp light irradiation to the antibacterial glass powders as prepared according to each of Present Example 1 and Comparative Example 1, and FIG. 3 is an actual photograph showing a state after UV lamp light irradiation to the antibacterial glass powders as prepared according to each of Present Example 1 and Comparative Example 1. Furthermore, FIG. 4 and FIG. 5 are photographs showing the results of the antibacterial activity test of the antibacterial glass powders as prepared according to each of Present Examples 1 and 2. In this regard, FIG. 4 is a photograph showing the results of the antibacterial activity test against Staphylococcus aureus, and FIG. 5 is a photograph showing the results of the antibacterial activity test against Escherichia coli.

The vitrification was classified into a case where the glass properties were homogeneously achieved, and a case where opalescence and the unmelted product occur. In addition, in order to identify the antibacterial activity of each antibacterial glass powder, the antibacterial activity against each of Staphylococcus aureus and Escherichia coli was measured using a shake flask method (ASTM E2149-13a).

**[Table 2]**

| Examples | | Present Example 1 | Present Example 2 | Comparative Example 1 |
|---|---|---|---|---|
| Vitrification (O, X) | | O | O | O |
| Vitrification temperature (Tg, °C) | | 523 | 527 | 521 |
| Luminescence characteristics | | Red Emission | Red Emission | X |
| Antibacterial activity | Staphylococcus aureus | 99.9% | 99.9% | 99.9% |
| | Escherichia coli | 99.9% | 99.9% | 99.9% |

As shown in Tables 1 to 2 and FIG. 2 to FIG. 5, 0.5 wt% and 1 wt% of Eu₂O₃ were added to Present Examples 1 and 2 respectively, while Comparative Example 1 was free of Eu₂O₃.

In this regard, the antibacterial power (against each of Staphylococcus aureus and Escherichia coli) of the antibacterial glass powders of Comparative Example 1 was 99.9%, while the antibacterial power (against each of Staphylococcus aureus and Escherichia coli) of the antibacterial glass powders of each of Present Examples 1 and 2 was also 99.9%.

It may be identified that the antibacterial glass powders prepared according to each of Present Example 1 and Comparative Example 1 have a transparent color before irradiating light from the UV lamp thereto.

In this regard, it may be identified that when the light from the UV lamp is irradiated to the antibacterial glass powders prepared according to Present Example 1, the antibacterial glass powders emit red light. On the other hand, when the light from the UV lamp is irradiated to the antibacterial glass powders prepared according to Comparative Example 1, the antibacterial glass powders did not exhibit any luminescence phenomenon.

Furthermore, it was identified that in Present Example 1 to which Eu₂O₃ was added to achieve the luminescent function, the existing properties and shape of the glass were maintained as unchanged, and only the luminescent function was added thereto.

As may be identified from the above experimental results, the antibacterial agent is added to plastics, fibers, etc. at each of 0.5 wt% and 1 wt% to impart the antibacterial function to the product and provide the hygiene function to the consumer. It is difficult to distinguish whether a small amount of white antibacterial agent is added to a part or product unit.

Therefore, according to the present disclosure, the luminescent function is imparted to the antibacterial agent. When high energy light is irradiated to the product using a UV lamp, the luminescence from the antibacterial agent existing inside the antibacterial plastic may be visually identified. Thus, it becomes easy to identify whether the antibacterial agent is contained in the part.

Although the present disclosure has been described with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described and illustrated in the description of the embodiment of the present disclosure above, it is obvious that predictable effects from the configuration should also be recognized.

## Claims

1. A luminescent antibacterial glass composition comprising:
20 to 40 wt% of SiO₂;
1.5 to 10 wt% of B₂O₃;
20 to 40 wt% of ZnO;
5 to 10 wt% of Al₂O₃;
5 to 10 wt% of MgO;
a total of 5 to 30 wt% of at least one of Na₂O, K₂O, or CaO;
a total of 0.1 to 5 wt% of at least one of CuO or Ag₂O; and
0.1 to 2 wt% of a luminescent oxide.

2. The luminescent antibacterial glass composition of claim 1, wherein Na₂O is added in a content of 2 to 10 wt%,
wherein K₂O is added in a content of 2 to 15 wt%,
wherein CaO is added in a content of 1 to 5 wt%.

3. The luminescent antibacterial glass composition of claim 1, wherein CuO is added in a content of 0.1 to 5 wt%,
wherein Ag₂O is added in a content of 0.1 to 2 wt%.

4. The luminescent antibacterial glass composition of claim 1, wherein the luminescent oxide includes at least one of Eu₂O₃ or Tb₄O₇.

5. The luminescent antibacterial glass composition of claim 1, wherein the luminescent oxide is Eu₂O₃,
wherein Eu₂O₃ is added in a content of 0.5 to 1.0 wt%.

6. A method for preparing luminescent antibacterial glass powders, the method comprising:
(a) a step of mixing and stirring 20 to 40 wt% of SiO₂, 1.5 to 10 wt% of B₂O₃, 20 to 40 wt% of ZnO, 5 to 10 wt% of Al₂O₃, 5 to 10 wt% of MgO, a total of 5 to 30 wt% of at least one of Na₂O, K₂O, or CaO, a total of 0.1 to 5 wt% of at least one of CuO or Ag₂O, and 0.1 to 2 wt% of a luminescent oxide with each other to prepare a luminescent antibacterial glass composition;
(b) a step of melting the luminescent antibacterial glass composition;
(c) a step of cooling the molten luminescent antibacterial glass composition; and
(d) a step of pulverizing the cooled luminescent antibacterial glass composition to obtain the luminescent antibacterial glass powders.

7. The method for preparing luminescent antibacterial glass powders of claim 6, wherein in the step (a), Na₂O is added in a content of 2 to 10 wt%, K₂O is added in a content of 2 to 15 wt%, and CaO is added in a content of 1 to 5 wt%.

8. The method for preparing luminescent antibacterial glass powders of claim 6, wherein in the step (a), CuO is added in a content of 0.1 to 5 wt%, and Ag₂O is added in a content of 0.1 to 2 wt%.

9. The method for preparing luminescent antibacterial glass powders of claim 6, wherein in the step (a), the luminescent oxide includes at least one of Eu₂O₃ or Tb₄O₇.

10. The method for preparing luminescent antibacterial glass powders of claim 6, wherein in the step (a), the luminescent oxide is Eu₂O₃, wherein Eu₂O₃ is added in a content of 0.5 to 1.0 wt%.

11. The method for preparing luminescent antibacterial glass powders of claim 6, wherein in the step (b), the melting is performed at a temperature of 1,000 to 1,300°C and for 30 to 90 minutes.

12. The method for preparing luminescent antibacterial glass powders of claim 6, wherein in the step (d), each of the luminescent antibacterial glass powders has an average diameter of 5 to 15 µm based on D₅₀.
